# EUROPÄISCHE PATENTSCHRIFT

(11) **EP 2 656 707 B1**
(45) Veröffentlichungstag und Bekanntmachung des Hinweises auf die Patenterteilung: **06.09.2017**
(21) Anmeldenummer: 13401042.0
(22) Anmeldetag: 22.04.2013
(51) Int. Cl.: A01B 3/46

(54) **Pflug mit Stützrad**
Plough with support wheel
Charrue avec roue d'appui

(30) Priorität: 26.04.2012 DE 102012103666
(43) Veröffentlichungstag der Anmeldung: 30.10.2013
(73) Patentinhaber: Amazonen-Werke H. Dreyer GmbH & Co. KG, 49205 Hasbergen (DE)
(72) Erfinder: Ahring, Sören, 49214 Bad Rothenfelde (DE); Laumann, Bernhard, 48477 Hörstel - Riesenbeck (DE); Resch, Rainer, 49170 Hagen a TW (DE)

(56) Entgegenhaltungen:
- DE-A1- 4 103 288
- DE-A1-102006 039 513
- DE-A1-102010 048 287
- US-A- 2 860 563
- US-A- 2 927 651

## Beschreibung

Die Erfindung bezieht sich auf einen Pflug mit Stützrad mit einem an einem Anbaubock zur Verbindung des Drehpfluges mit einem landwirtschaftlichen Schlepper dreh- und/oder schwenkbar befestigbaren, über ein Stützrad auf den Erdboden abstützbaren Pflugrahmen und mit auf gegenüberliegenden Seiten des Pflugrahmens angeordneten Pflugscharreihen, so dass durch eine über einen Drehzylinder eingeleitete Drehbewegung des Pflugrahmens wahlweise die eine oder die andere Pflugscharreihe in ihre Betriebsstellung oder in ihre Außerbetriebsstellung überführbar ist, wobei das Stützrad zur Arbeitstiefenführung des Drehpfluges an einem schwenkbaren Radarm gehaltert ist, über ein eines über einen Halter am Pflugrahmen abgestütztes Verstellelement in seiner Arbeitstiefenführung einstellbar ist, bei einer Drehung des Pflugrahmens mitsamt dem Verstellelement in seine gegenüberliegend ausgerichtete Stützbetriebsstellung schwenkt und über ein Kopplungsglied lösbar mit dem Verstellelement verbunden ist.

Drehpflüge mit auf gegenüberliegenden Seiten eines Pflugrahmens angeordneten Pflugscharreihen haben jeweils Pflugscharreihen, die auf der einen Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Der Pflugrahmen ist über ein Stützrad auf dem Erdboden abzustützen, über das eine Tiefeneinstellung des Pfluges erfolgen kann. Dies kann über mechanische Spindeln oder auch über Hydraulikzylinder erfolgen, um je nach den Pfluganforderungen die optimale Arbeitstiefeneinstellung bzw. -führung sicherstellen zu können.

Aus der DE 10 2006 039 513 A1 ist ein Drehpflug der eingangs genannten Art bekannt, bei dem ein Drehzylinder zur Breitenverstellung des Pflugrahmens sowie ein Radzylinder zur Arbeitstiefeneinstellung des Stützrades vorgesehen sind. Der Radzylinder des Stützrades wird betätigt, um das Stützrad in eine angehobene mittlere Position zu überführen, wonach der Pflugrahmen um 180° verschwenkt wird und dann ein Ausschwenken des Pflugrahmens und ein Überführen des Stützrades in die Stützstellung über den Radzylinder erfolgen kann. Das Stützrad ist an einem schwenkbaren Radarm gehalten. Um für den Transport des Pfluges das Stützrad in eine Nachlauftransportstellung zu bringen, kann der Radzylinder von dem Stützrad abgekoppelt werden. Dazu ist ein Kopplungsglied in Gestalt eines Bolzens von dem Gelenkauge der Kolbenstange des Radzylinders zu lösen. Danach kann das Stützrad über ein Gelenk mit einer quer zur Schwenkachse des Radarmes verlaufenden Gelenkachse in die Transportstellung verschwenkt und dort verriegelt werden. Ist der Pflug in seine Arbeitsstellung zu bringen, ist das Stützrad zurück zu verschwenken. Danach ist der Bolzen wieder in das Gelenkauge der Kolbenstange des Radzylinders zu bringen, um den Radzylinder mit dem Stützrad zu verbinden. Dazu müssen der Bolzen und das Gelenkauge der Kolbenstange des Radzylinders exakt fluchten. Dies zu bewerkstelligen ist kraftaufwändig und durch bei einem Pflug unvermeidbare Erd- und Schmutzanhaftungen erschwert. Mit der Überführung des Pfluges aus der Transport- in die Arbeitsstellung geht mithin ein erheblicher Arbeits- und Zeitaufwand einher.

Darüber hinaus hat sich bei einem Drehpflug dieser Art als nachteilig herausgestellt, dass aufgrund von Fertigungstoleranzen die eine Pflugscharreihe einen anderen Tiefenführungsgrad in einer Nullstellung aufweisen kann als eine andere Pflugscharreihe, so dass bei übereinstimmender Stellbewegungen des Verstellelementes nach einer Drehbewegung des Pfluges sich ungleichmäßige Pflugtiefen ergeben können. Damit gehen bei Hin- und Rückfahrten während der Pflugarbeit nachteilige ungleichmäßige Pflugergebnisse einher.

Es ist Aufgabe der vorliegenden Erfindung, einen Drehpflug der eingangs genannten Art zur Verfügung zu stellen, mit dem auch bei Hin- und Rückfahrten beim Pflügen und mithin nach erfolgten Drehbewegungen des Pfluges ein gleichmäßiges Pflugergebnis zu erzielen ist.

Zur Lösung dieser Aufgabe zeichnet sich der Pflug der gattungsgemäßen Bauart dadurch aus, dass der Halter des Verstellelementes und/oder das Kopplungsglied des Stützrades mit einem verstellbaren Exzenter versehen ist bzw. sind.

Mit diesem verstellbaren Exzenter sind etwaige, z.B. infolge von Fertigungstoleranzen aufgetretene Ungleichmäßigkeiten bei Pflugscharen der einen Pflugscharreihe gegenüber Pflugscharen einer anderen gegenüberliegenden Pflugscharreihe auszugleichen. Der dazu erforderliche Bauaufwand ist ausgesprochen gering. Der verstellbare Exzenter kann z.B. als Exzenterhülse ausgebildet sein, die auf den beispielsweise als Bolzen ausgebildeten Halter des Verstellelementes aufzusetzen ist und beispielsweise in ein Gelenkauge einer Kolbenstange eines Verstellzylinders, der das Verstellelement bildet, eingreift. Zusätzlich oder alternativ kann der Exzenter auf das Kopplungslied des Stützrades aufgesetzt werden, das beispielsweise als Achsstummel oder Bolzen ausgebildet ist.

Zur Verstellung kann der Exzenter mit entsprechenden Ausnehmungen versehen sein, in die die Bedienperson zur Verstellung des Exzenters mit einem Werkzeug eingreifen kann. Ebenfalls ist es möglich, den Exzenter in einer eingestellten Position zu arretieren. Nachjustierungen sind somit mit einfachen Mitteln möglich.

Vorzugsweise ist das Ende des Verstellmittels bzw. die Verbindung zwischen Verstellmittel und Pflugrahmen, in die der Halter eingreift, derart ausgebildet, dass die durch den Exzenter hervorgerufene Lageverschiebung durchgeführt werden kann. Dazu kann das Gelenkauge z.B. einer Kolbenstange eines Verstellzylinders entsprechend groß ausgebildet sein. Ebenfalls ist es möglich, z.B. dieses Befestigungsglied klauenartig mit einer inneren Führung auszubilden, in die ein Steckbolzen als Sicherungselement eingreift.

Bevorzugtermaßen ist vorgesehen, dass zur Aufnahme des Kopplungsgliedes eine mit dem Verstellelement verbindbare Führungsvorrichtung mit einer Führungskulisse und mit einer Führungsaufnahme vorgesehen ist und dass das Kopplungsglied in der Führungskulisse aus einer Ausgangsstellung in der Führungsaufnahme durch eine Verfahrbewegung des und/oder Verschwenkbewegung der Führungsvorrichtung mit dem Einhergehen der Verschwenkung des Radarmes Verstellelementes in eine das Stützrad mit dem Verstellelement verbindende verriegelbare Endstellung überführbar ist. Ist ein derartiges Kopplungsglied mit dem verstellbaren Exzenter versehen, kann dieses in optimaler Weise mit dem Exzenter in die Führungsaufnahme und die Führungskulisse eingefädelt werden.

Damit sind in besonders vorteilhafter Weise in zusammenwirkender Hinsicht nicht nur Fertigungsungenauigkeiten durch den Exzenter auszugleichen, sondern es ist ebenfalls möglich, im rauen Alltagsbetrieb mit einfachen Mitteln den Wechsel von Transport- und Arbeitsstellung durchzuführen.

Damit ist ein Drehpflug geschaffen, dessen Stützrad sich mit einem weit verminderten Kraft- und Arbeitsaufwand aus der Transportstellung mit einer abgekoppelten Verstelleinrichtung in die Arbeitsstellung mit gekoppeltem Verstellelement überführen lässt. Das Kopplungsglied zwischen dem Stützrad und dem Verstellelement ist für einen Wiedereinkoppelvorgang lediglich in die Führungsaufnahme zu bringen, die von ihren äußeren Abmessungen her großzügig gestaltet werden kann. Somit ist ein wesentlich einfacheres Einfädeln des Kopplungsgliedes in die Führungsaufnahme auch bei Vorhandensein von Verschmutzungen und Erdanbackungen mit wesentlich geringerem Kraftaufwand ermöglicht.

Ist das Kopplungsglied in die Führungsaufnahme der Führungsvorrichtung eingefädelt, kann durch eine Verfahrbewegung des Verstellelementes das Kopplungsglied ohne zusätzlichen manuellen Aufwand durch eine Bedienperson entlang der Führungskulisse gleiten und seine Endstellung einnehmen, wobei die Führungskulisse derart gestaltet sein kann, dass das Kopplungsglied in seiner Endstellung in einer optimalen Gelenkanordnung gelegen ist, um eine optimierte Lagerung des Stützrades zu gewährleisten. Der mit der Führungsvorrichtung einhergehende bauliche Gestehungsaufwand ist gering. Die für einen Kopplungsvorgang eingesparten Aufwändungen und damit einhergehenden Zeiteinsparungen sind jedoch erheblich.

Andererseits kann nach dem Einfädeln der Führungsvorrichtung in die Führungsaufnahme durch eine manuelle Verschwenkbewegung der Führungsvorrichtung mit dem Einhergehen der Verschwenkung des Radarmes das Kopplungsglied in der Führungskulisse entgleiten und in seine verriegelbare Endstellung mit verringertem Kraftaufwand gebracht werden. Hierdurch ergeben sich ebenfalls die vorgenannten Vorteile.

Bevorzugterweise ist die Führungsvorrichtung an dem verfahrbaren Verstellelement, das seinerseits bevorzugtermaßen als Verstellzylinder mit einer ein- und ausfahrbaren Kolbenstange ausgebildet ist, befestigt. Die Führungsvorrichtung kann als Führungsplatte ausgebildet sein mit einer Führungskulisse, die als ein Langloch ausgebildet sein kann mit einer vorderen vergrößerten Lochausnehmung, so dass insgesamt die Führungskulisse mit ihrer Führungsaufnahme bevorzugtermaßen einer Schlüssellochausnehmung in der Führungsvorrichtung gleicht. Zudem ist das Stützrad mit seinem Radarm nach Abkopplung des Verstellelementes in eine Transportstellung zu verschwenken. Die Verschwenkung erfolgt dabei bevorzugtermaßen um eine Schwenkachse, die orthogonal zu der Tiefeneinstellungsachse ausgerichtet ist, also der Tiefeneinstellungsachse, um die das Stützrad und damit auch sein Radarm in der Arbeitsstellung nach oben und nach unten hin verschwenkt.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: eine Draufsicht auf ein Ausführungsbeispiel eines Drehpfluges nach der Erfindung;
- Fig. 2: eine Seitenansicht des Ausführungsbeispiels nach Fig. 1;
- Fig. 3: vergrößert einen Teilbereich eines Pflugrahmens mit einem an einem Radarm gehalterten Stützrad in einer Seitenansicht in der Arbeitsstellung des Stützrades;
- Fig. 4: das Ausführungsbeispiel nach Fig. 3 in einer perspektivischen Darstellung schräg von oben;
- Fig. 5: eine zu Fig. 4 analoge Darstellung während eines Entkopplungsvorganges des Kopplungsgliedes des Stützrades;
- Fig. 6: eine perspektivische Darstellung des Stützrades mit seinem Radarm mit entkoppelten Verstellelement und in einer Transportstellung;
- Fig. 7: eine Einzeldarstellung (teilweise abgebrochen) eines Stützrades mit einem Achsstummel, der mit einer Exzenterhülse versehen ist in einer Betriebsstellung der Exzenterhülse,
- Fig. 8: eine zu Fig. 7 analoge Darstellung mit verdrehter Exzenterhülse,
- Fig. 9: eine perspektivische Darstellung eines alternativen Ausführungsbeispiels einer Anordnung mit einem Exzenter, wobei der Exzenter an dem dem Pflugrahmen zugewandten Ende des Verstellmittels angeordnet ist im gekoppelten Zustand, und
- Fig. 10: eine zu Fig. 9 analoge Darstellung im entkoppelten Zustand des Verstellmittels.

In der Zeichnung sind grundsätzlich gleichwirkende Teile mit übereinstimmenden Bezugsziffern versehen.

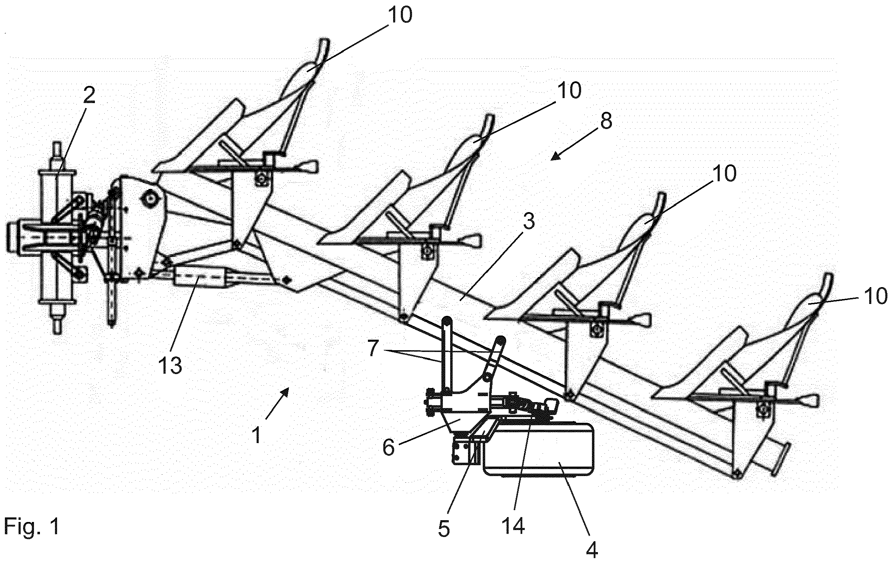

In Fig. 1 ist ein Ausführungsbeispiel eines allgemein mit 1 bezifferten Drehpfluges gezeigt, der über einen Anbaubock 2 an einem im Einzelnen nicht näher gezeigten landwirtschaftlichen Schlepper anhängbar ist und der einen Pflugrahmen 3 aufweist, der über ein Stützrad 4 auf den Erdboden abzustützen ist. Dieses Stützrad 1 ist über einen Radarm 5 an einem Pflugrahmenteil 6 verschwenkbar abgestützt, das über Streben 7 mit dem Pfugrahmen 3 verbunden ist. Der Pflugrahmen 3 trägt allgemein mit 8 und 9 bezifferte Pflugscharreihen mit Pflugkörpern 10, die gegenüberliegend an dem Pflugrahmen 3 angeordnet sind. Das Stützrad 4 kann bei entsprechender Ansteuerung und Einstellung auch für den Transport des Pfluges dienen.

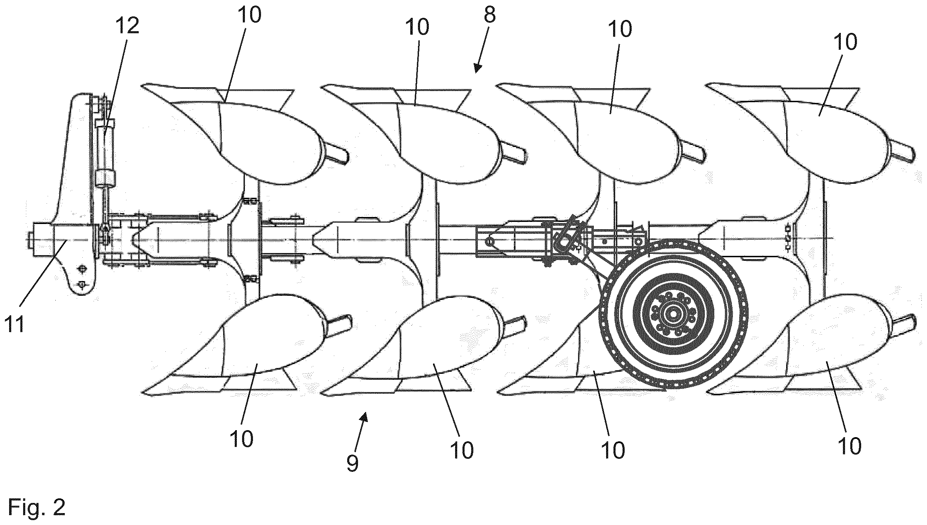

Die Seitenansicht nach Fig. 2 verdeutlicht, dass diese in 180°-Positionierung gegen-überliegend angeordnet sind, wobei sich in der Darstellung nach Fig. 1 die Pflugkörper 10 der Pflugscharreihe 3 in der Arbeits- und Betriebsstellung befinden. Der Pflugrahmen ist um eine Schwenkachse 11 von einem Drehzylinder 12 um 180° zu verschwenken.

Des Weiteren ist aus Fig. 1 noch ein Rahmeneinschwenkzylinder 13 ersichtlich, der zur Breitenverstellung des Drehpfluges 1 vorgesehen ist, um den Pflugrahmen 3 einwärts oder auswärts zu verschwenken. Für eine Wende- bzw. Drehbewegung wird der Pflugrahmen 3 zumindest annähernd mittig hinter dem Schlepper eingeschwenkt. Ist eine Wende- bzw. Drehbewegung des Pflugrahmens 3 um 180° durchgeführt, wird der Pflugrahmen 3 über den Rahmeneinschwenkzylinder 13 wieder in seine Arbeits-und Betriebsstellung ausgeschwenkt.

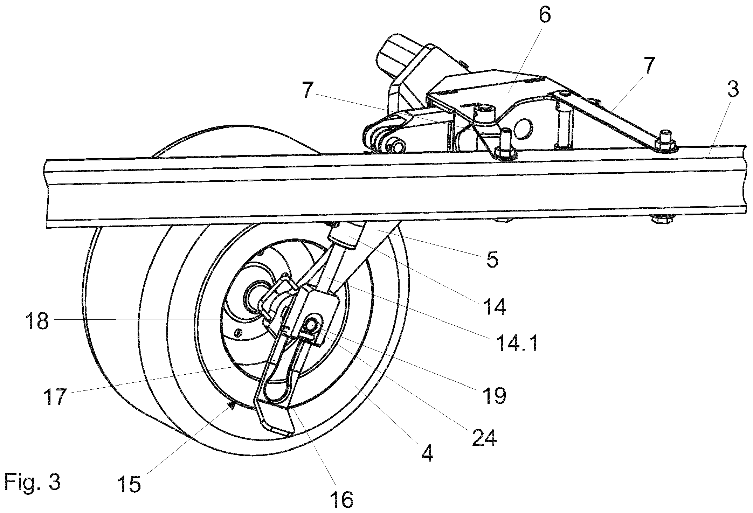

In Fig. 3 ist das Stützrad 4 mit dem als Verstellzylinder 14 ausgebildeten Verstellelement und seiner Kolbenstange 14.1 näher dargestellt, und zwar in der Arbeitsstellung des Stützrades am Pflugrahmen 3, wobei die Führungsvorrichtung 15 mit der Führungsaufnahme 16 und der Führungskulisse 17 näher veranschaulicht sind.

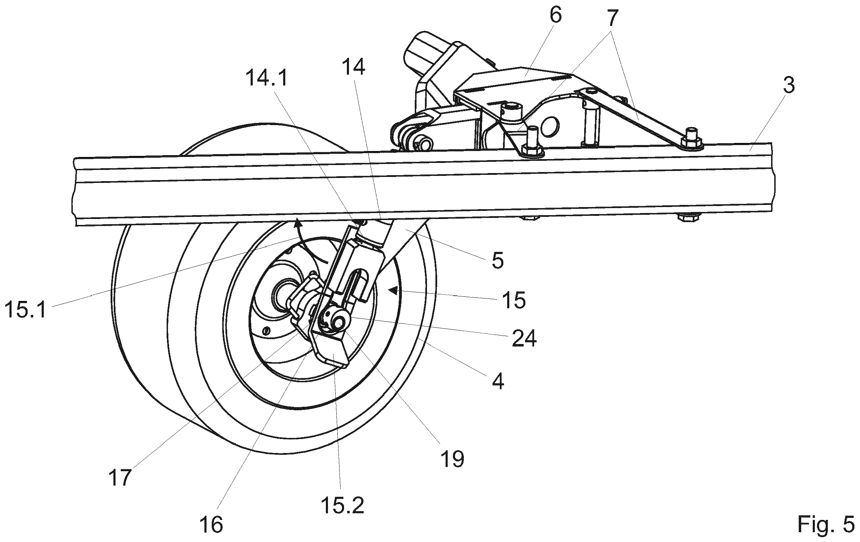

Die Führungsvorrichtung 15 ist plattenförmig mit einer Abwinklung ausgebildet und am Ende der Kolbenstange 14.1 vorgesehen und an dieser befestigt. Die Führungsaufnahme 16 ist am Ende der Führungskulisse 17, die als Langloch ausgebildet ist, vorgesehen, so dass die Führungsaufnahme 16 und die Führungskulisse 17 eine schlüssellochartige Führung für das Kopplungsglied 9 des Stützrades 4 bilden. In der in Fig. 3 ersichtlichen Endstellung des Kopplungsgliedes 19 ist dieses durch einen Bolzen 18 verriegelt und mithin in der Führungskulisse 17 in dieser Position unverschiebbar gelagert. Wie aus Fig. 3 ersichtlich ist, ist die Führungsaufnahme 16 im unteren Bereich der Führungskulisse 17 wesentlich größer gestaltet als der Außendurchmesser des Kopplungsgliedes 19, so dass sich, wie aus Fig. 5 ersichtlich ist, das Kopplungsglied 19 nach Entriegelung durch den Bolzen 18 und nach einer entsprechenden Verfahrbewegung der Kolbenstange 14.1 einfach und leicht aus der Führungsaufnahme 16 herausbewegen lässt bzw. für eine Kopplung des Kopplungsgliedes 19 mit der Führungsvorrichtung 16 auch leicht wieder in die Führungsaufnahme 16 der Führungsvorrichtung 15 einfädeln lässt, auch wenn unvermeidbare Verschmutzungen oder Erdanhaftungen vorliegen.

Eine erste Möglichkeit das Koppelglied 19 in der Führungsvorrichtung 5 in seine verriegelbare Endstellung zu bringen ist folgende:
Durch eine Verstellbewegung der Kolbenstange 14.1 des Verstellzylinders 14 kann nach Einfädeln des Kopplungsgliedes 19, wie dies in Fig. 5 dargestellt ist, durch eine einfache Verfahrbewegung der Kolbenstange 14.1 das Kopplungsglied 19 in die in Fig. 3 gezeigte Endstellung überführt werden durch eine Verfahrbewegung entlang der Führungskulisse 17 und in dieser Endstellung durch eine Verriegelung mit Hilfe des Bolzens 18 gesichert werden. Der damit einhergehende Aufwand ist gering.

Eine weitere Möglichkeit, dass Kopplungslied 19 in der Führungsvorrichtung 5 in seine verriegelbare Endstellung zu bringen ist folgende:
Durch eine von Hand durchzuführende Verschwenkbarkeit der Führungsvorrichtung 15 wird die Führungsvorrichtung 15 in Schwenkrichtung 15.1 nach oben geschwenkt. Dies geschieht dadurch, dass eine Bedienungsperson mit zumindest einer Hand an die sich am unteren Ende der Führungsvorrichtung 15 befindlichen Handhabe 15.2 anfasst und die Führungsvorrichtung 15 entsprechend verschwenkt. Hierdurch gleitet das Koppelglied 19 in der Führungskulisse 17 nach oben in die verriegelbare Endstellung und wird hier durch den Bolzen 18 verriegelt, wie Fig. 3 zeigt.

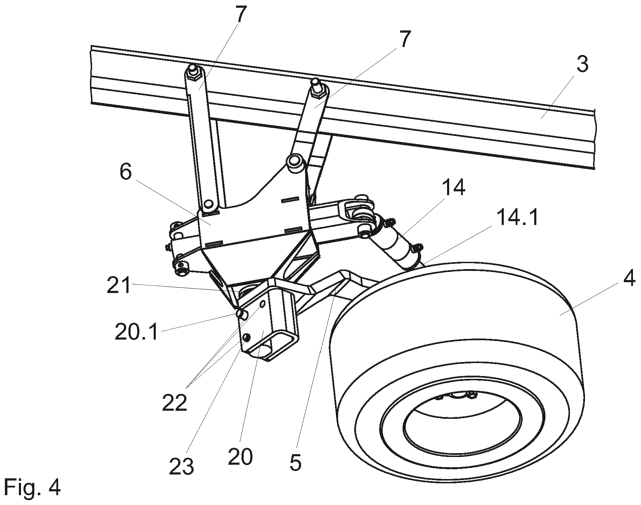

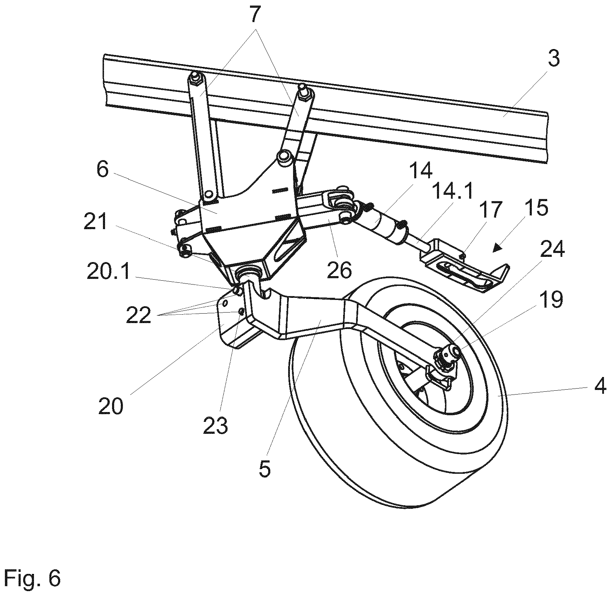

In Fig. 6 ist das Stützrad 4 mit seinem Radarm 5 und dem Kopplungsglied 19 von der Führungsvorrichtung 15 und damit von dem Verstellelement 14 bzw. entkoppelt. Über eine Befestigungsvorrichtung 20 ist das Stützrad 4 an einer Rahmenachse 21 angeordnet. Dort ist die Befestigungsvorrichtung 20 mit dem Radarm 5 und das Stützrad 4 um die Achse des Bolzens 20.1, mit dem Befestigungsvorrichtung 20 mit der Rahmenachse 21 verbunden ist, verschwenkbar, um das Stützrad 4 aus der Arbeitsstellung (Fig. 4) in die verschwenkte Transportstellung, wie sie in Fig. 6 gezeigt ist, zu verschwenken. In dieser verschwenkten Lage des Stützrades 4 lässt sich durch eine Verschwenkung des Pflugrahmens 3 eine Transportstellung ansteuern, in der das Stützrad 5 eine nachlaufende Transportlage zur Abstützung des Pfluges während einer Transportfahrt einnehmen kann. Die Befestigungsvorrichtung 20 weist verschiedene, im konkreten Beispiel zwei Lochausnehmungen 22 auf, in die ein Bolzen 23 einführbar ist, um den Radarm 5, die Befestigungsvorrichtung 20 und damit das Stützrad 4 in der jeweiligen verschwenkten Arbeits- bzw. Transportstellung zu sichern. Dies ist in den Fig. 4 und Fig. 6 erkennbar.

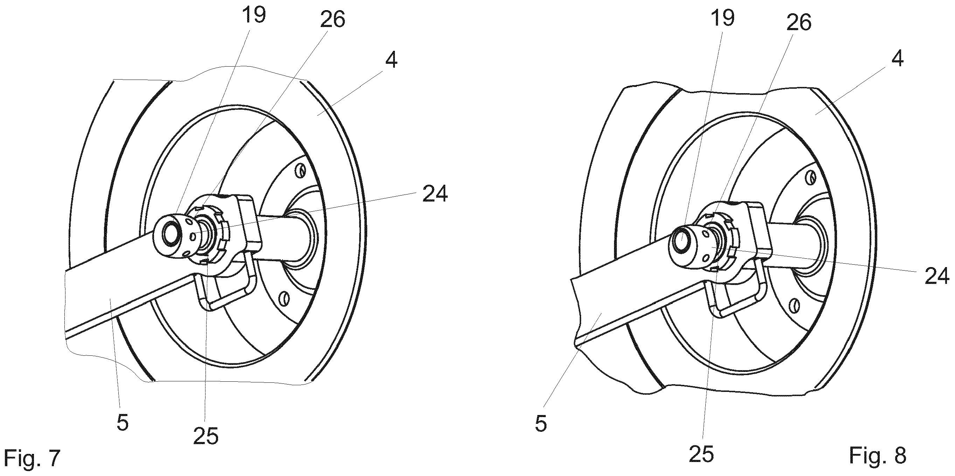

In Fig. 7 ist das Stützrad 4 dargestellt mit dem Kopplungsglied 19 und dem Radarm 5, wobei auf dem Achsstummel 25 des Stützrades 4 ein Exzenter in Gestalt einer Exzenterhülse 24 aufgesetzt ist. Diese Exzenterhülse 24 hat Lochausnehmungen 26, in die ein Werkzeug zwecks Verstellung der Exzenterhülse 24 einzuführen ist. Wie aus dem Vergleich der Fig. 7 und 8 hervorgeht, kann die Exzenterhülse 24 um den Achsstummel 25 verdreht und in verschiedenen Positionen arretiert werden, so dass sich unterschiedliche Höhenabstände in der Endstellung des Kopplungsgliedes 19 in der Kulissenführung 17 ergeben können (Fig. 3).

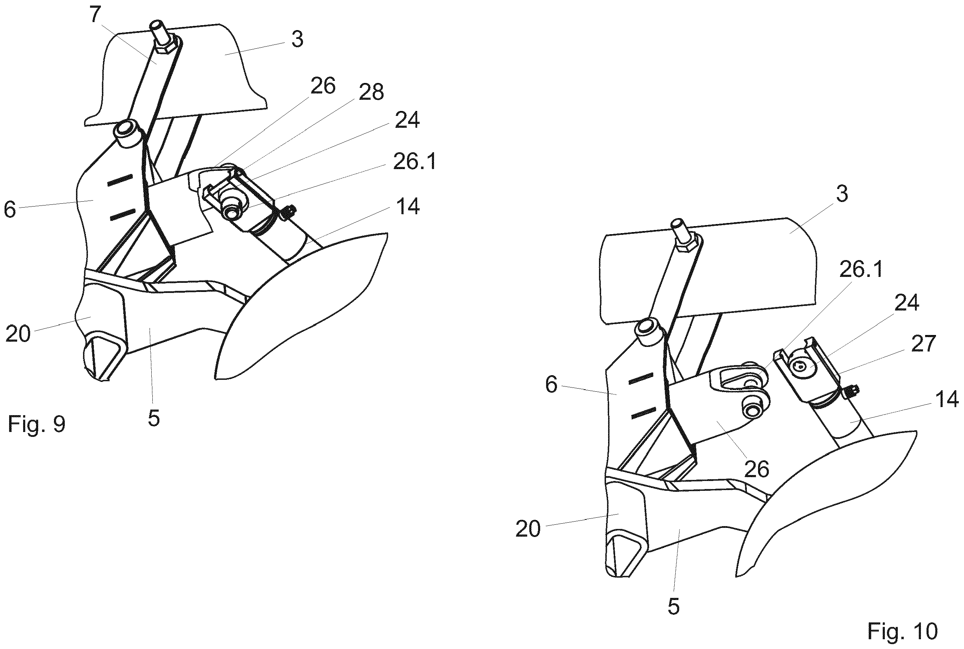

Die Fig. 9 und 10 veranschaulichen, dass der Exzenter 24 auch an dem Halter 26 des Verstellelementes 14 an dem Pflugrahmen 3 vorgesehen sein kann. Dazu ist an dem dem Pflugrahmen 3 zugewandten Ende des Verstellelementes 14 eine klauenartige Platte 27 mit einer Aufnahme vorgesehen, die über einen Bolzen 28 zu verriegeln ist. Der Haltebolzen 26.1 des Halters 26 kann den Exzenter 24, also die Exzenterhülse durchsetzen, wobei durch eine Verdrehung der Exzenterhülse 24 der Lageabstand des Halters 26 innerhalb der klauenartigen Vorrichtung des Verstellelementes 14 zu verändern und in verschiedenen Positionen zu arretieren ist, um etwaige Fertigungstoleranzen auszugleichen.

## Patentansprüche

1. Drehpflug (1) mit einem an einem Anbaubock (2) zur Verbindung des Drehpfluges (1) mit einem landwirtschaftlichen Schlepper dreh- und/oder schwenkbar befestigbaren, über ein Stützrad (4) auf dem Erdboden abstützbaren Pflugrahmen (3) und mit auf gegenüberliegenden Seiten des Pflugrahmens (3) angeordneten Pflugscharreihen (8,9), so dass durch eine über einen Drehzylinder (12) eingeleitete Drehbewegung des Pflugrahmens (3) wahlweise die eine (8) oder die andere Pflugscharreihe (9) in ihre Betriebsstellung oder in ihre Außerbetriebsstellung überführbar ist, wobei das Stützrad (4) zur Arbeitstiefenführung des Drehpfluges (1) an einem schwenkbaren Radarm (5) gehaltert ist und über ein einenends über einen Halter (26) am Pflugrahmen (3) abgestütztes Verstellelement (14, 14.1) in seiner Arbeitstiefenführung einstellbar ist, und über ein Kopplungsglied (19) mit dem Verstellelement (14,14.1) verbunden ist, wobei bei einer Drehung des Pflugrahmens (3) das Stützrad (4) mitsamt dem Verstellelement (14, 14.1) in seine gegenüberliegend ausgerichtete Stützbetriebsstellung schwenkbar ist **dadurch gekennzeichnet, dass** der Halter (26) des Verstellelementes (14, 14.1) und/oder das Kopplungsglied (19) des Stützrades (4) mit einem verstellbaren Exzenter (24) versehen ist (sind).

2. Drehpflug nach Anspruch 1, **dadurch gekennzeichnet, dass** der Exzenter (24) als Exzenterhülse ausgebildet, die auf den Halter (26) und/oder das Kopplungsglied (19) aufgesetzt ist.

3. Drehpflug nach Anspruch 1 oder 2, **dadurch gekennzeichnet, dass** der Exzenter (24) drehbar und in gewünschte Position arretierbar ist.

4. Drehpflug nach einem der Ansprüche 1 bis 3, wobei das Verstellelement (14, 14.1) über das Koppelglied (19) lösbar mit dem Stützrad verbunden ist, **dadurch gekennzeichnet, dass** zur Aufnahme des Kopplungsgliedes (19) eine mit dem Verstellelement (19, 19.1) verbindbare Führungsvorrichtung (15) mit einer Führungskulisse (17) und mit einer Führungsaufnahme (16) vorgesehen ist, und dass das Kopplungsglied (19) in der Führungskulisse (17) aus einer Ausgangsstellung in der Führungsaufnahme (16) durch eine Verfahrbewegung des Verstellelementes (14, 14.1) und/oder Verschwenkbewegung der Führungsvorrichtung mit dem Einhergehen der Verschwenkbewegung des Radarmes in eine das Stützrad (4) mit dem Verstellelement (14, 14.1) verbindende verriegelbare Endstellung überführbar ist.

5. Drehpflug nach einem der Anspruch 1 bis 4, **dadurch gekennzeichnet, dass** die Führungsvorrichtung (15) an dem verfahrbaren Verstellelement (14, 14.1) befestigt ist.

6. Drehpflug nach Anspruch 5, **dadurch gekennzeichnet, dass** das Verstellelement (14, 14.1) als Verstellzylinder ausgebildet ist und die Führungsvorrichtung (15) an einer ein- und ausfahrbaren Kolbenstange (14.1) des Verstellzylinders (14) befestigt ist.

7. Drehpflug nach einem der Ansprüche 1 bis 6, **dadurch gekennzeichnet, dass** die Führungsvorrichtung (15) als Führungsplatte ausgebildet ist.

8. Drehpflug nach einem der Ansprüche 1 bis 7, **dadurch gekennzeichnet, dass** die Führungskulisse (17) der Führungsvorrichtung (15) als Langloch ausgebildet ist.

9. Drehpflug nach einem der Ansprüche 1 bis 8, **dadurch gekennzeichnet, dass** die Führungskulisse (17) mit ihrer Führungsaufnahme (16) als Schlüssellochausnehmung in der Führungsvorrichtung (15) ausgebildet ist.

10. Drehpflug nach einem der Ansprüche 1 bis 9, **dadurch gekennzeichnet, dass** das Stützrad (4) mit seinem Radarm (5) nach Abkopplung des Verstellelementes (14, 14.1) um eine im Wesentlichen orthogonal zu seiner liegenden Tiefeneinstellungsachse ausgerichteten Schwenkachse in eine Transportstellung verschwenkbar ist.

11. Drehpflug nach einem der Ansprüche 1 bis 10, **dadurch gekennzeichnet, dass** das Kopplungsglied (19) in seiner das Stützrad (4) mit dem Verstellelement (14, 14.1) gekoppelten Endstellung durch einen lösbaren Steckbolzen (18) verriegelbar ist.

12. Drehpflug nach Anspruch 11, **dadurch gekennzeichnet, dass** der Radarm (5) des Stützrades (4) über eine Befestigungsvorrichtung (20) an einer Rahmenachse (21) des Stützrades (4) befestigbar ist, um die die Befestigungsvorrichtung (20) mitsamt dem Radarm (5) und dem Stützrad (4) in die verschwenkte Transportstellung verschwenkbar ist.

13. Drehpflug nach einem der Ansprüche 1 bis 12, **dadurch gekennzeichnet, dass** die Befestigungsvorrichtung (20) durch einen Steckbolzen (23) an der Rahmenachse (21) und Aufnahmen (22) in der Befestigungsvorrichtung (20) in der Arbeitsstellung und in der verschwenkten Transportstellung arretierbar ist.

## Claims

1. Alternating plough (1) with a plough frame (3) which is fastenable rotatably and/or pivotably to a headstock (2) for connecting the alternating plough (1) to an agricultural tractor, is supportable on the ground via a support wheel (4) and has rows of ploughshares (8, 9) arranged on opposite sides of the plough frame (3) such that, by means of a rotational movement of the plough frame (3) initiated via a rotary cylinder (12), either the one row of ploughshares (8) or the other row of ploughshares (9) is transferable into the operating position thereof or into the non-operating position thereof, wherein, for the working depth guide of the alternating plough (1), the support wheel (4) is held on a pivotable wheel arm (5) and is settable in the working depth guide thereof via an adjustment element (14, 14.1) supported on the plough frame (3) via a holder (26), and is connected to the adjustment element (14, 14.1) via a coupling member (19), wherein, when the plough frame (3) rotates, the support wheel (4) together with the adjustment element (14, 14.1) is pivotable into its oppositely oriented support operating position, **characterized in that** the holder (26) of the adjustment element (14, 14.1) and/or the coupling member (19) of the support wheel (4) are/is provided with an adjustable eccentric (24).

2. Alternating plough according to Claim 1, **characterized in that** the eccentric (24) is designed as an eccentric sleeve which is placed onto the holder (26) and/or the coupling member (19).

3. Alternating plough according to Claim 1 or 2, **characterized in that** the eccentric (24) is rotatable and is lockable in the desired position.

4. Alternating plough according to one of Claims 1 to 3, wherein the adjustment element (14, 14.1) is connected releasably to the support wheel via the coupling member (19), **characterized in that**, in order to accommodate the coupling member (19), a guide device (15) which is connectable to the adjustment element (19, 19.1) is provided with a guide slot (17) and with a guide receptacle (16), and **in that** the coupling member (19) is transferable in the guide slot (17) from a starting position in the guide receptacle (16) into a lockable end position connecting the support wheel (4) to the adjustment element (14, 14.1) by means of a traversing movement of the adjustment element (14, 14.1) and/or pivoting movement of the guide device accompanied by the pivoting movement of the wheel arm.

5. Alternating plough according to one of Claims 1 to 4, **characterized in that** the guide device (15) is fastened to the movable adjustment element (14, 14.1).

6. Alternating plough according to Claim 5, **characterized in that** the adjustment element (14, 14.1) is designed as an adjustment cylinder, and the guide device (15) is fastened to a retractable and extendable piston rod (14.1) of the adjustment cylinder (14).

7. Alternating plough according to one of Claims 1 to 6, **characterized in that** the guide device (15) is designed as a guide plate.

8. Alternating plough according to one of Claims 1 to 7, **characterized in that** the guide slot (17) of the guide device (15) is designed as an elongated hole.

9. Alternating plough according to one of Claims 1 to 8, **characterized in that** the guide slot (17) together with its guide receptacle (16) is designed as a keyhole recess in the guide device (15).

10. Alternating plough according to one of Claims 1 to 9, **characterized in that**, after decoupling of the adjustment element (14, 14.1), the support wheel (4) together with its wheel arm (5) is pivotable into a transport position about a pivot axis oriented substantially orthogonally to its horizontal depth-setting axis.

11. Alternating plough according to one of Claims 1 to 10, **characterized in that** the coupling member (19) is lockable in its end position, in which the support wheel (4) is coupled to the adjustment element (14, 14.1), by means of a releasable plug-in pin (18).

12. Alternating plough according to Claim 11, **characterized in that** the wheel arm (5) of the support wheel (4) is fastenable via a fastening device (20) to a frame axle (21) of the support wheel (4), about which the fastening device (20) is pivotable together with the wheel arm (5) and the support wheel (4) into the pivoted transport position.

13. Alternating plough according to one of Claims 1 to 12, **characterized in that** the fastening device (20) is lockable in the working position and in the pivoted transport position by a plug-in pin (23) on the frame axle (21) and receptacles (22) in the fastening device (20).

## Revendications

1. Charrue brabant (1) avec un châssis de charrue (3) pouvant être fixé de façon rotative et/ou pivotante à une potence d'attelage (2) destinée à la liaison de la charrue brabant (1) avec un tracteur agricole et pouvant s'appuyer sur le sol au moyen d'une roue d'appui (4) et avec des rangées de socs (8, 9) disposées sur des côtés opposée du châssis de charrue (3), de telle manière que l'une (8) ou l'autre (9) rangée de socs puisse au choix être amenée dans sa position de travail ou dans sa position hors service par un mouvement de rotation du châssis de charrue (3) provoqué par un cylindre de rotation (12), dans laquelle la roue d'appui (4) est supportée sur un bras de roue pivotant (5) pour le guidage de la profondeur de travail de la charrue brabant (1) et peut être réglée dans son guidage de la profondeur de travail au moyen d'un élément de réglage (14, 14.1) appuyé par une extrémité sur le châssis de charrue (3) au moyen d'un support (26), et est reliée à l'élément de réglage (14, 14.1) par un organe de couplage (19), dans laquelle, lors d'une rotation du châssis de charrue (3), la roue d'appui (4) avec l'élément de réglage (14, 14.1) peut pivoter dans sa position de service d'appui orientée en opposition, **caractérisée en ce que** le support (26) de l'élément de réglage (14, 14.1) et/ou l'organe de couplage (19) de la roue d'appui (4) est/sont muni(s) d'un excentrique réglable (24).

2. Charrue brabant selon la revendication 1, **caractérisée en ce que** l'excentrique (24) est réalisé en forme de douille d'excentrique, qui est montée sur le support (26) et/ou sur l'organe de couplage (19).

3. Charrue brabant selon la revendication 1 ou 2, **caractérisée en ce que** l'excentrique (24) est rotatif et peut être arrêté dans la position désirée.

4. Charrue brabant selon l'une quelconque des revendications 1 à 3, dans laquelle l'élément de réglage (14, 14.1) est relié à la roue d'appui de façon séparable au moyen de l'organe de couplage (19), **caractérisée en ce qu'**il est prévu, pour recevoir l'organe de couplage (19), un dispositif de guidage (15) pouvant être relié à l'élément de réglage (19, 19.1) avec une coulisse de guidage (17) et avec un logement de guidage (16), et **en ce que** l'organe de couplage (19) dans la coulisse de guidage (17) peut être transféré d'une position initiale dans le logement de guidage (16) par un mouvement de déplacement de l'élément de réglage (14, 14.1) et/ou un mouvement de pivotement du dispositif de guidage avec l'exécution du mouvement de pivotement de la roue d'appui dans une position finale verrouillable reliant la roue d'appui (4) à l'élément de réglage (14, 14.1).

5. Charrue brabant selon l'une quelconque des revendications 1 à 4, **caractérisée en ce que** le dispositif de guidage (15) est fixé à l'élément de réglage déplaçable (14, 14.1).

6. Charrue brabant selon la revendication 5, **caractérisée en ce que** l'élément de réglage (14, 14.1) est réalisé en forme de cylindre de réglage et le dispositif de guidage (15) est fixé à une tige de piston pouvant sortir et rentrer (14.1) du cylindre de réglage (14).

7. Charrue brabant selon l'une quelconque des revendications 1 à 6, **caractérisée en ce que** le dispositif de guidage (15) est réalisé en forme de plaque de guidage.

8. Charrue brabant selon l'une quelconque des revendications 1 à 7, **caractérisée en ce que** la coulisse de guidage (17) du dispositif de guidage (15) est réalisée en forme de trou oblong.

9. Charrue brabant selon l'une quelconque des revendications 1 à 8, **caractérisée en ce que** la coulisse de guidage (17) avec son logement de guidage (16) est réalisée en forme d'évidement en trou de serrure dans le dispositif de guidage (15).

10. Charrue brabant selon l'une quelconque des revendications 1 à 9, **caractérisée en ce que** la roue d'appui (4) avec son bras de roue (5) peut, après le découplage de l'élément de réglage (14, 14.1), pivoter dans une position de transport autour d'un axe de pivotement orienté essentiellement orthogonalement à son axe de réglage de profondeur horizontal.

11. Charrue brabant selon l'une quelconque des revendications 1 à 10, **caractérisée en ce que** l'organe de couplage (19) peut être verrouillé par un boulon enfichable amovible (18) dans sa position finale couplant la roue d'appui (4) à l'élément de réglage (14, 14.1).

12. Charrue brabant selon la revendication 11, **caractérisée en ce que** le bras de roue (5) de la roue d'appui (4) peut être fixé par un dispositif de fixation (20) à un axe de châssis (21) de la roue d'appui (4), autour duquel le dispositif de fixation (20) avec le bras de roue (5) et la roue d'appui (4) peut pivoter dans la position de transport repliée.

13. Charrue brabant selon l'une quelconque des revendications 1 à 12, **caractérisée en ce que** le dispositif de fixation (20) peut être bloqué par un boulon enfichable (23) sur l'axe de châssis (21) et des logements (22) dans le dispositif de fixation (20) dans la position de travail et dans la position de transport repliée.
